# EUROPEAN PATENT APPLICATION

(11) **EP 2 456 044 A1**
(43) Date of publication of application: **23.05.2012**
(21) Application number: 10799721.5
(22) Date of filing: 28.06.2010
(51) Int. Cl.: H02J 17/00

(54) **METHOD AND APPARATUS FOR TRANSMITTING POWER AND DATA FOR USB DEVICE**

(30) Priority: 17.07.2009 JP 2009168385
(71) Applicant: Aska Electron Co., Ltd., Osaka 532-0003 (JP); Fujikura Co., Ltd., Tokyo 135-8512 (JP); Yonezawa Electric Wire Co., Ltd., Yonezawa-shi Yamagata 992-0026 (JP)
(72) Inventor: TAKAISHI Konomu, Osaka-shi Osaka 532-0003 (JP)
(74) Representative: Fleuchaus, Michael A.
(86) International application number: PCT/JP2010/060968
(87) International publication number: WO 2011/007661

(57) **Abstract**

In a power and data transmission method which can transmit power and information (data) simultaneously and contactlessly to a USB device using a USB interface, and an apparatus therefor, a pair of coil units are magnetically coupled to each other. Each of the coil units has: a power transmission coil configured by a coil which is wound in a plane, and a magnetic shield member which is placed on a rear surface of the coil; and an information transmission coil configured by a coil which is wound in a plane, and a magnetic shield member which is placed on a rear surface of the coil, the coil diameter of the information transmission coil is made different from that of the power transmission coil, and the information transmission coil and the power transmission coil are stacked. Data are transmitted while power is transmitted to the USB device.

## Description

### Technical Field

The present invention relates to a method and apparatus which is used in power and data transmissions in a USB device using a USB interface, such as portable small electronic apparatus, for example, a portable telephone or a PDA, and more particularly to a technique for non-contact power and data transmissions where a planar coil in which a coil is planarly wound is used.

### Background Art

In a USB apparatus (USB device) using a USB interface, in USB 1.1 and USB 2.0, a 5 V power supply and GND, and D+ and D- information lines are defined in the standard, and it is difficult to form the both in a non-contact state.

Although recently a wireless transmission such as UWB (ultrawideband wireless) has been advanced, it is impossible in principle to perform a wireless power transmission. Therefore, an apparatus which simultaneously transmits power and information in a non-contact manner, and which is compliant with a USB interface is hardly produced.

On the other hand, a contactless power transmission system (Patent Literature 1) in which a power transmission is performed in a non-contact (contactless) manner, and a data transfer circuit (Patent Literature 2) in which a data transmission is performed in a non-contact (contactless) manner have been proposed.

In these conventional contactless power transmission system and data transfer circuit, a pair of coils are opposingly placed, and power is supplied to or data is transmitted to or received from a secondary apparatus by means of electromagnetic induction between the pair of coils.

### Prior Art Literature

### Patent Literature

Patent Literature 1: Japanese Patent Application Laid-Open No. 2006-230032
Patent Literature 2: Japanese Patent Application Laid-Open No. 2006-157230

### Summary of the Invention

### Problem to be Solved by the Invention

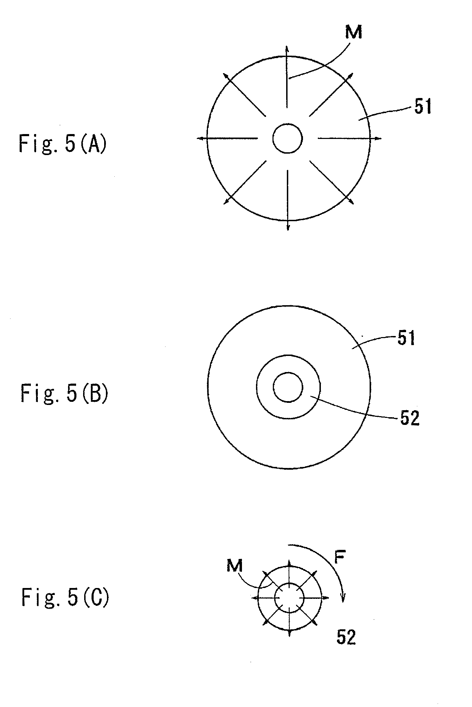

In a system such as that of Patent Literature 1, usually, a power transmission coil (51) has a structure where a shield is placed outside a power transmission/reception coil, and, as shown in Fig. 5A, magnetic fluxes (M) at that time are generated in parallel to the surface of the coil without leaking to the outside of the shield.

Then, with respect to the positional relationship between an information transmission coil (52) and the power transmission coil (51), they may be contemplated to be placed on concentric circles as shown in Fig. 5B. In such a placement, the density of magnetic fluxes generated by the power transmission coil (51) is high, and also the information transmission coil (52) is in a positional relationship in which the coil receives the generated magnetic fluxes (M) in an optimum direction as shown in Fig. 5C. Therefore, a large electromotive force (F) is generated, and has a large influence on transmission/reception signals for information transmission which is the original purpose, so that a sufficient S/N ratio cannot be obtained.
Consequently, the system is not adequate for information transmission. In the positional relationship, moreover, a signal of the information transmission coil, i.e., the magnetic fluxes (M) are converted to an electromotive force of the power transmission coil (51), and most of the energy is absorbed to increase the loss, so that the system is impractical.

As described above, in each of conventional noncontact power transmission system and data transfer circuit, power or information can be individually conveyed by means of electromagnetic induction produced between the pair of coils, but information and power cannot be simultaneously conveyed, and there is no technical concept that information and power are simultaneously conveyed.

In view of forgoing, it is an object of the invention to provide a power and data transmission method which can convey power and information (data) simultaneously and contactlessly to a USB device using a USB interface, and an apparatus therefor.

### Means for Solving the Problem

In order to attain the object, the invention is **characterized in that** a pair of coil units are magnetically coupled to each other, each of the coil units having: a power transmission coil configured by a coil which is wound in a plane, and a magnetic shield member which is placed on a rear surface of the coil; and an information transmission coil configured by a coil which is wound in a plane, and a magnetic shield member which is placed on a rear surface of the coil, a coil diameter of the information transmission coil being formed to be smaller than a coil diameter of the power transmission coil, the information transmission coil and the power transmission coil being stacked in a state where the information transmission coil is positioned in a coil outer circumferential portion of the power transmission coil, and data are transmitted while power is transmitted to a USB device.

### Effects of the Invention

According to the invention, the coil diameter of the information transmission coil is formed to be smaller than that of the power transmission coil, and magnetic fields are superimposed by stackingly placing the information transmission coil and the power transmission coil in the state where the information transmission coil is positioned in the coil outer circumferential portion of the power transmission coil. Although the direction of the magnetic fluxes of the power transmission coil pass through the information transmission coil, therefore, the positional relationship in which an electrical offset is performed is obtained, and hence substantially little electromotive force is generated. Moreover, also the magnetic fluxes generated by the information transmission coil are in a direction along which the fluxes are hardly absorbed by the power transmission coil, and hence the loss can be reduced. As a result of the above, information can be conveyed by a small power without impairing a signal for information transmission. Consequently, high-speed data transmission can be performed without impairing the efficiency of power transmission, and also without impairing the throughput and quality of information conveyance.

Furthermore, a USB signal is configured by D+ and D-, and they differentially operate in most regions. In a differential portion, therefore, D+ and D- can be produced by inverting a reception side signal by a pair of coils.

Only in a region indicating the end of a packet, D+ and D- are in phase. When the pair of coils transmit a signal having a predetermined pattern, however, also transmission of the in-phase portion is enabled. As a countermeasure against the in-phase portion, a further pair of coils for transmitting a signal for only the in-phase portion may be provided.

### Brief Description of the Drawings

[Fig. 1] Fig. 1 is an exploded perspective view showing an embodiment of a coil unit.
[Fig. 2] Fig. 2 is an exploded perspective view showing a different embodiment of the coil unit.
[Fig. 3] Fig. 3 is a perspective view showing a use example of the invention.

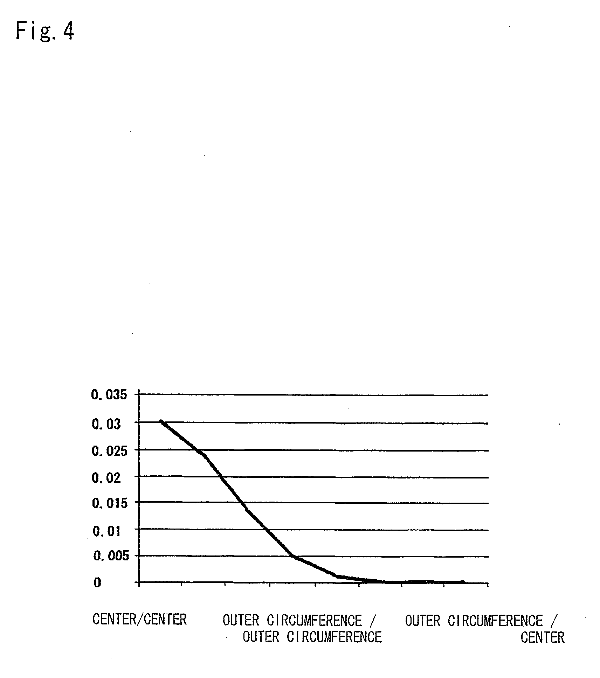

[Fig. 4] Fig. 4 is a graph showing an electromotive force of an information transmission coil according to the placement of a power transmission coil and the information transmission coil.
[Fig. 5] Fig. 5 is a view showing the directions of magnetic fluxes in the power transmission coil and the information transmission coil.

### Best Mode for Carrying Out the Invention

The coil unit (1) is configured by stackingly placing an information transmission coil (7) in which a rectangular magnetic shield member (6) is placed on the rear surface side of a coil (5) that is planarly wound, on an upper surface portion of a power transmission coil (4) in which a rectangular magnetic shield member (3) is placed on the rear surface side of a coil (2) that is planarly wound.

The coil diameter (d) of the information transmission coil (7) is formed to be smaller than the coil diameter (D) of the power transmission coil (4), and the information transmission coil (7) is placed in a portion which is close to the outer circumference of the power transmission coil (4).

A pair of coil units (1) which are configured as described above are opposingly placed, one of the coil units is set as a primary coil (power-transmission side coil), the other coil unit is set as a secondary coil (power-reception side coil), and electromagnetic induction is produced between the coils, whereby power and information supplied to the primary coil are transmitted to the secondary coil.

The power transmission coil (4) and the information transmission coil (7) may be configured by forming a printed wiring on a laminated circuit board, by spirally winding a single-core lead wire, or by spirally winding a Litz wire.

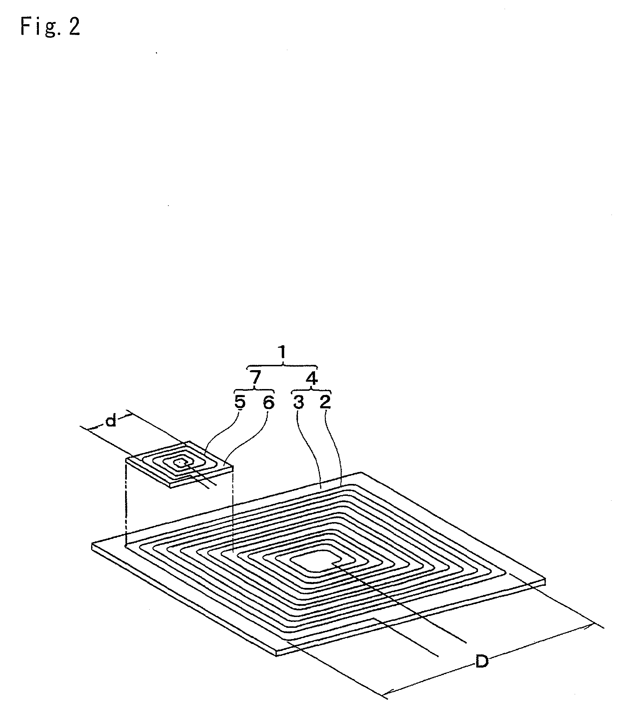

An embodiment shown in Fig. 2 has the same configuration as the above-described embodiment except that the coils (2), (5) for the power transmission coil (4) and information transmission coil (7) constituting the coil unit (1) are planarly wound so as to be formed into a substantially rectangular shape.

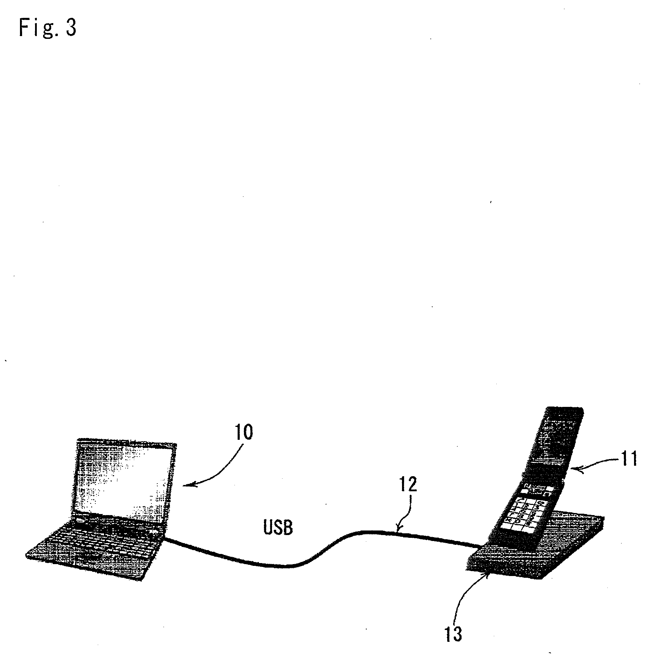

Fig. 3 shows a use example to which the invention is applied, and shows a case where a computer (10) and a portable telephone (11) that is shown as an example of a USB device are connected to each other. In this case, a coil unit functioning as the secondary coil is incorporated in the portable telephone (11), and a coil unit functioning as the primary coil is incorporated in a device holder (13) which is connected to the computer (10) through a USB cable (12).

In this case, in the device holder (13), power supplied through a power supply line from the computer (10) functioning as a USB host controller is supplied to the power transmission coil (4) of the primary coil through a power-transmission side circuit, and the information transmission coil (7) of the primary coil and the computer (10) are connected to each other through an information transmission circuit.
By contrast, the power transmission coil (4) of the secondary coil incorporated in the portable telephone (USB device) (11) is connected to a power supply of the portable telephone (USB device) (11), and the information transmission coil (7) of the secondary coil is connected to an information transmission circuit so that signals of D+ and D- are conveyed.

In a state where the portable telephone (USB device) (11) is not placed on the device holder (13), power is 10 mW or less and is not substantially consumed, and also the USB is in a reset state. Next, when the portable telephone (USB device) (11) is placed on the device holder (13), an ID recognition function which is incorporated in the power-transmission side circuit of the power transmission coil (4) enables power to begin to be transmitted, and, when power is supplied to an information conveyance circuit of the power-reception side coil (1), the reset of the USB is canceled to start communication. When viewed from the computer (10) on the side of the USB host controller, therefore, a function which is equivalent to a case where a usual external memory is connected to the USB is exerted, and also an MP3 player is charged.

As described above, the configuration where the coil unit (1) in which the information transmission coil (7) and the power transmission coil (4) are stackingly placed is employed can not only function as a substitution of a USB cable for connecting a USB host controller and a USB device to each other, and but also totally eliminate connection connectors on the side of USB devices (apparatuses). The waterproof and dustproof properties can be further enhanced, and moreover chargers for USB devices (apparatuses) can be commonized. The action of inserting a USB connector into a USB device (apparatus) is changed to that of placing a USB device (apparatus) on the device holder (13), and hence also the convenience is enhanced.

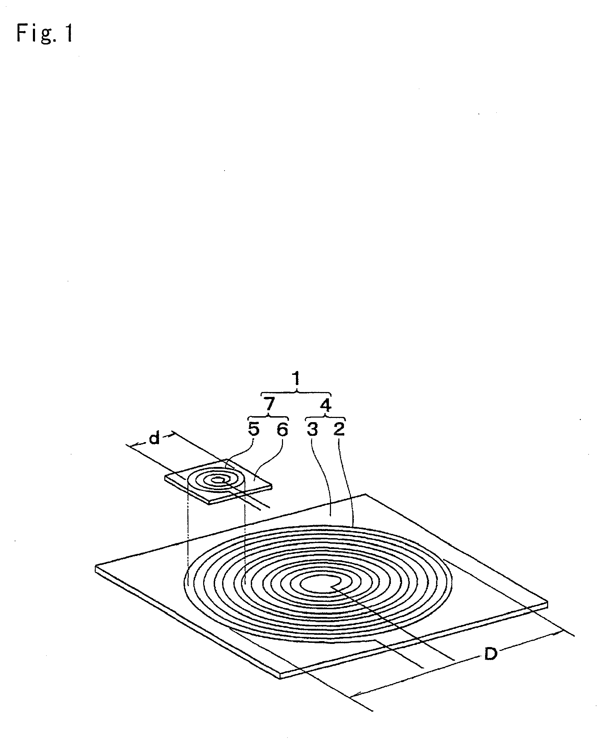

The electromotive forces generated in the information transmission coils (7), (52) were measured in a case where a circular coil having a diameter of 45 mm was used as the power transmission coil (4), a circular coil having a diameter of 15 mm was used as the information transmission coil (7), and the power transmission coil (51) and information transmission coil (52) shown in Fig. 5B were placed on concentric circles, and also in a case where the information transmission coil (7) was placed in an outer circumferential portion of the power transmission coil (4) shown in Fig. 1. The electromotive force which was generated in the case where the power transmission coils (4), (51) and the information transmission coils (7), (52) were placed on concentric circles was 30 mV. By contrast, the electromotive force in the case where the information transmission coils (7), (52) were placed in outer circumferential portions of the power transmission coils (4), (51) was 1 mV. Furthermore, when the centers of the information transmission coils (7), (52) are placed in outer circumferential portions of the power transmission coils (4), (51), the electromotive force is reduced to 0.001 mV.

From the above, it is seen that the positions of the information transmission coils (7), (52) are preferably those where magnetic fluxes in the opposite direction do not pass, and, as the outer circumferential edges of the information transmission coils (7), (52) are remoter from the centers of the power transmission coils (4), (51), the information transmission coils are less susceptible to the magnetic fluxes. Considering a projection plane, from the viewpoint of the component area, a practical position is considered to be preferably at a position where the outer circumferential edges of the both coils overlap with each other. Then, the electromotive force is sufficiently suppressed at a position where the outer circumferential edges of the both coils overlap with each other, and the position is a position suitable for information conveyance.

The above embodiments have been described with respect to the configuration where the magnetic shield members are formed into a square shape. The shield members may have an oblong rectangular shape according to the shape of the USB device functioning as the secondary. In this case, also the shape of each coil may be an oblong rectangular shape or an oblong circular shape. The coil shape may be that according to the shape of the magnetic shield member, and, for example, rhombic, polygonal, circular, or oval.

### Description of Reference Numerals

1 ... coil unit, 2 ... coil for power transmission coil, 3 ... magnetic shield member for power transmission coil, 4 ... power transmission coil, 5 ... coil for information transmission coil, 6 ... magnetic shield member for information transmission coil, 7 ... information transmission coil, 10 ... computer, 11 ... portable telephone (USB device), 12 ... USB cable, 13 ... device holder.

## Claims

1. A power and data transmission method for a USB device wherein a pair of coil units (1) are magnetically coupled to each other, each of said coil units having: a power transmission coil (4) configured by a coil (2) which is wound in a plane, and a magnetic shield member (3) which is placed on a rear surface of said coil (2); and an information transmission coil (7) configured by a coil (5) which is wound in a plane, and a magnetic shield member (6) which is placed on a rear surface of said coil (5), a coil diameter of said information transmission coil (7) being formed to be smaller than a coil diameter of said power transmission coil (4), said information transmission coil (7) and said power transmission coil (4) being stackingly placed in a state where said information transmission coil (7) is positioned in a coil outer circumferential portion of said power transmission coil (4), and data are transmitted while power is transmitted to the USB device.

2. A power and data transmission apparatus for a USB device wherein a pair of coil units (1) are magnetically coupled to each other, each of said coil units having: a power transmission coil (4) configured by a coil (2) which is wound in a plane, and a magnetic shield member (3) which is placed on a rear surface of said coil (2); and an information transmission coil (7) configured by a coil (5) which is wound in a plane, and a magnetic shield member (6) which is placed on a rear surface of said coil (5), a coil diameter of said information transmission coil (7) being formed to be smaller than a coil diameter of said power transmission coil (4), said information transmission coil (7) and said power transmission coil (4) being stackingly placed in a state where said information transmission coil (7) is positioned in a coil outer circumferential portion of said power transmission coil (4), and data are transmitted while power is transmitted to the USB device.
